# EUROPEAN PATENT SPECIFICATION

(11) **EP 4 702 700 B1**
(45) Date of publication and mention of the grant of the patent: **02.12.2026**
(21) Application number: 24722218.5
(22) Date of filing: 25.04.2024
(51) Int. Cl.: H04L 9/40, G07C 9/00, H04L 9/32, H04W 4/80

(54) **CONTROLLING ACCESS BASED ON PASSCODE**
ZUGANGSKONTROLLE BASIEREND AUF PASSCODE
COMMANDE D'ACCÈS SUR LA BASE D'UN MOT DE PASSE

(30) Priority: 27.04.2023 SE 2350510
(43) Date of publication of application: 04.03.2026
(73) Proprietor: Abloy Oy, 80100 Joensuu (FI)
(72) Inventor: OVASKA, Marko, 00630 Helsinki (FI)
(74) Representative: Kransell & Wennborg KB
(86) International application number: PCT/EP2024/061431
(87) International publication number: WO 2024/223758

(56) References cited:
- EP-A1- 3 905 632
- US-A1- 2021 319 639

## Description

### TECHNICAL FIELD

The present disclosure relates to the field of an electronic lock restricting access to a physical space, and in particular to an electronic lock controlling access based on a passcode.

### BACKGROUND

Locks and keys are evolving from the traditional pure mechanical locks. These days, electronic locks are becoming increasingly common. For electronic locks, no mechanical key profile is needed for authentication of a user.

One type of electronic lock is one that can evaluate access decisions based on a user entering a passcode, e.g. in the form of a PIN (personal identification number). The PIN can consist of a sequence of digits, e.g. four or six digits. However, there is a security risk that users can relatively easily share passcodes. For this reason, one-time passcodes (also known as one-time passwords), can be used, that are only valid for a single use. A problem arises how such one-time passcodes can be used for locks that do not have access to a reliable network connection.

### SUMMARY

One object is to improve security for passcode-based electronic locks, particularly for such locks that do not have access to a reliable network connection.

According to a first aspect, it is provided a method for controlling access to a restricted physical space. The method being performed by a system comprising a user device and an electronic lock. The method comprises: receiving, by the user device, an encrypted set of at least one valid one-time passcode; receiving, by the user device, separately from the encrypted set of at least one valid one-time passcode, a separate passcode; generating, by the user device, an access request comprising the separate passcode and the encrypted set of at least one valid one-time passcode; sending, by the user device, the access request to the electronic lock; receiving, by the electronic lock, the access request; decrypting, by the electronic lock, the set of at least one valid one-time passcode; determining, by the electronic lock, that the separate passcode matches a passcode in the set of at least one one-time passcode; and setting, by the electronic lock, the electronic lock in an unlocked state.

According to a second aspect, it is provided a method for controlling access to a restricted physical space. The method being performed by an electronic lock. The method comprises: receiving an access request from a user device, the access request comprising a separate passcode, wherein the access request further comprises an encrypted set of at least one of valid one-time passcodes; decrypting the set of at least one of valid one-time passcodes; determining that the separate passcode matches a passcode in the set of at least one of one-time passcodes; and setting the electronic lock in an unlocked state.

The separate passcode may be an entered passcode, having been manually entered into the user device by a user.

The separate passcode may be received by the user device in a message.

The message may be an e-mail message or a text message of a cellular communication network.

The set of at least one of valid one-time passcodes may be cryptographically signed with a digital signature. In this case the method further comprises: verifying that the digital signature is valid, based on a prestored public key in the electronic lock.

The passcodes may be in the form of a sequence of digits.

The method may further comprise: determining a user identity based on an association between the separate passcode and user identity, wherein the association is included in the access request.

According to a third aspect, it is provided an electronic lock for controlling access to a restricted physical space. The electronic lock comprises: a processor; and a memory storing instructions that, when executed by the processor, cause the electronic lock to: receive an access request from a user device, the access request comprising a separate passcode, wherein the access request further comprises an encrypted set of at least one of valid one-time passcodes; decrypt the set of at least one of valid one-time passcodes; determine that the separate passcode matches a passcode in the set of at least one of one-time passcodes; and set the electronic lock in an unlocked state.

The separate passcode may be an entered passcode, having been manually entered into the user device by a user.

The separate passcode may be received by the user device in a message.

The message may be an e-mail message or a text message of a cellular communication network.

The set of at least one of valid one-time passcodes may be cryptographically signed with a digital signature. In this case, the electronic lock further comprises instructions that, when executed by the processor, cause the electronic lock to: verify that the digital signature is valid, based on a prestored public key in the electronic lock.

The passcodes may be in the form of a sequence of digits.

The electronic lock may further comprise instructions that, when executed by the processor, cause the electronic lock to: determine a user identity based on an association between the separate passcode and user identity, wherein the association is included in the access request.

According to a fourth aspect, it is provided a computer program for controlling access to a restricted physical space. The computer program comprises computer program code which, when executed on an electronic lock causes the electronic lock to: receive an access request from a user device, the access request comprising a separate passcode, wherein the access request further comprises an encrypted set of at least one of valid one-time passcodes; decrypt the set of at least one of valid one-time passcodes; determine that the separate passcode matches a passcode in the set of at least one of one-time passcodes; and set the electronic lock in an unlocked state.

According to a fifth aspect, it is provided a computer program product comprising a computer program according to the fourth aspect and a computer readable means comprising non-transitory memory in which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic diagram illustrating an environment in which embodiments presented herein can be applied;
Figs 2A-D are swimlane diagram illustrating embodiments of methods for controlling access to the restricted physical space;
Fig 3 is a schematic diagram illustrating components of the electronic lock of Fig 1; and
Fig 4 shows one example of a computer program product comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

Embodiments presented herein improve how passcode-based locks evaluate access by providing a convenient way to provide valid passcodes to the lock, even if the lock is (constantly or intermittently) offline. This is achieved by a user device (e.g. smartphone) acting both as an input device for the user to input a passcode, here denoted a separate passcode, as well as a conduit for providing valid passcode(s) to the electronic lock, to allow passcode matching by the electronic lock. The valid passcode(s) are encrypted for the electronic lock, whereby the user device is unable to read the valid passcode(s). On a separate channel, the user receives an indication of what passcode to use (e.g. by text message, e-mail or even on a paper note). The user enters the passcode into the user device. Alternatively, the user device receives the separate passcode directly over the separate channel, whereby the user does not need to enter the passcode into the user device. Once the user device has the separate passcode, the user device sends an access request, comprising both the separate passcode, and the encrypted valid passcode(s), to the electronic lock over local wireless communication. The electronic lock can then decrypt the encrypted valid passcode(s), and when the separate passcode matches a valid passcode, unlock. The experience is convenient for the user, only having to enter the passcode into the user device or event only to ensure the separate passcode is allowed to be transferred via the user device, while the electronic lock is able to evaluate the separate passcode, even if the electronic lock is not online. Notably, neither the user device needs to be online at the time of requesting access.

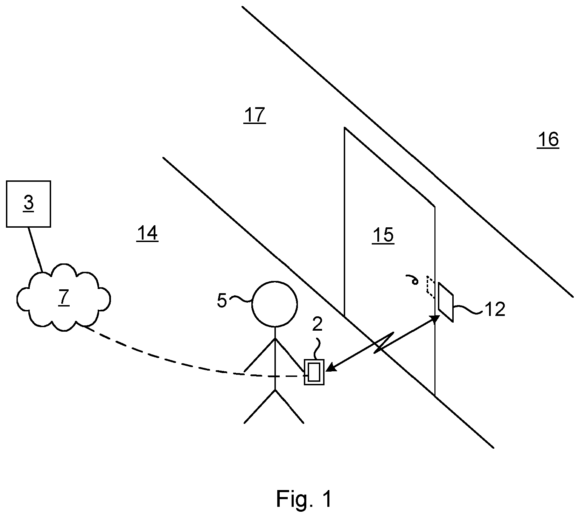

Fig 1 is a schematic diagram illustrating an environment in which embodiments presented herein can be applied. Access to a physical space 16 is restricted by an openable physical barrier 15 which is selectively unlockable. The physical barrier 15 stands between the restricted physical space 16 and an accessible physical space 14. Note that the accessible physical space 14 can be a restricted physical space in itself, but in relation to this physical barrier 15, the accessible physical space 14 is accessible. The barrier 15 can be a door, gate, hatch, cabinet door, drawer, window, etc. An electronic lock 12 is provided in order to control access to the physical space 16, by selectively unlocking the barrier 15.

The electronic lock 12 can be provided in a structure 17 (such as a wall) surrounding the barrier 15 (as shown), the electronic lock 12 can be provided in the barrier 15 itself (not shown), or the electronic lock 12 can be provided as a loose device such as a padlock. The electronic lock 12 is controllable to be in a locked state or in an unlocked state. Optionally, the electronic lock 12 comprises, or is connected to, a user input device, such as a keypad.

A user 5 brings a user device 2. The user device 2 is mobile and can be a smartphone, wearable device, tablet computer etc. The user device 2 can communicate with the electronic lock 12 using local wireless communication, such as using Bluetooth, Bluetooth Low Energy (BLE), ZigBee, Wi-Fi, Thread, Near-Field Communication (NFC), etc. The user device 2 can have some form of user input capability, e.g. using any one or more of a touch-screen, voice commands, physical buttons, etc.

A communication network 7, which can be an internet protocol (IP)-based network, is provided, to which a code generation server 3 is connected. The communication network 7 can e.g. comprise any one or more of a local wireless network (based on e.g. Wi-Fi and/or Bluetooth), a cellular network, a wired local-area network, a wide-area network (such as the Internet), etc. As explained in more detail below, the code generation server 3 is capable of generating one-time passcodes for use with the electronic lock 12.

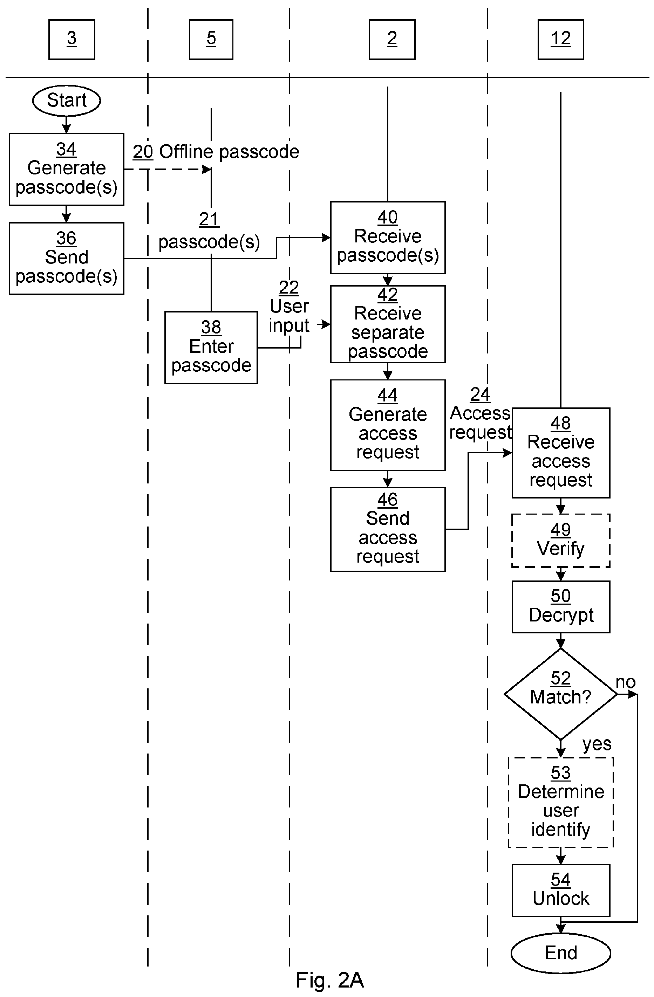

An access control operation in the environment of Fig 1 will now be explained, referring also to Figs 2A-D. Figs 2A-D are swimlane diagram illustrating embodiments of methods for controlling access to the restricted physical space 16. The swimlane diagrams can be considered to comprise a flow charts for methods in, respectively in lanes from left to right, the code generation server 3, the user 5, the user device 2 and the electronic lock 12. Communication between the entities is also shown. First, Fig 2A will mainly be referred to.

In a *generate passcode(s)* step 34, the code generation server 3 generates a set of at least one valid one-time passcode. Optionally, the at least one one-time passcode (individually or as a set) is associated with a particular user identity. The passcodes are in any suitable format that allows a user to input the passcode manually. For instance, the passcodes are in the form of a sequence of digits, e.g. 4, 6, or 8 digits, allowing convenient entry by the user using a numerical keypad. Alternatively, the passcodes can be in the form of a sequence of alphanumeric characters. In one embodiment, the set of passcodes contains only a single passcode. In this way, every time access to the electronic lock 12 is needed (i.e. that the procedure of Figs 2A-C is performed), a new set of a passcode is used.

In one way or another, the user 5 is informed of an offline passcode 20 in the set of at least one passcode. For instance, the user 5 can receive a text message or an e-mail informing the user 5 of the offline passcode 20. Alternatively, the user 5 is informed of the offline passcode 20 by an operator of the code generation server 3, e.g. on a paper note, post-it note or verbally. The offline passcode 20 is called offline since, in relation to the communication between the code generation server 3 and the user device 2, the offline passcode 20 is offline in the way that the user 5 is made aware of it and will enter the offline passcode 20 manually into the user device 2 (see below).

Once the set of at least one passcode is generated, the set is encrypted, for one or more electronic locks 12. The encryption can be an asymmetric encryption, whereby the encryption is performed using a public key. The public key forms part of a keypair also comprising a secret key. The electronic lock 12 can then decrypt the set using such a secret key of the same keypair that contains the public key used for the encryption. Alternatively, encryption is a symmetric encryption, where both the code generation server 3 and the electronic lock 12 have access to a single key that can be used for both encryption and decryption.

Optionally, code generation server 3 also cryptographically signs the set, e.g. using a secret key of a keypair for the code generation server 3.

Once generated, in a *send passcode(s)* step 36, the code generation server 3 sends the (encrypted an optionally signed) set of at least one passcode 21 to the user device 2, over the communication network 7.

In a *receive passcode(s)* step 40, the user device 2 receives the set of at least one passcode 21, in encrypted form. The user device 2 does not have a decryption key for decrypting the set of passcodes 21. The at least one passcode 21 can be received from the code generation server 3 over the communication network 7, since at least part of the time, the user device 2 is connected or connectable to the communication network 7. The operation of receiving the passcodes can occur in advance to when the user device 2 is near the electronic lock 12 for access evaluation. In this way, the user device 2 does not need to be online when the access control occurs.

When the user 5 (and the user device 2) is at the site of the electronic lock 12, an application (also known as app) for access control of the user device 2 is started. The application can be started manually, or the application can be started automatically, e.g. based on the user device 2 detecting local wireless communication with the electronic lock 12.

In an *enter passcode* step 38, the user 5 enters the offline passcode 20 into the user device 2 using user input, e.g. on a virtual keypad, virtual keyboard, physical keypad/keyboard, voice input, etc. The user input 22 is thus provided to the user device 2, whereby, in a *receive user input* step 42, the user device 2 receives the user input 22 for the passcode being manually entered into the user device 2 by the user 5. This user input 22 results in an entered passcode.

In a *generate access request* step 44, the user device 2 generates an access request comprising the entered passcode and the encrypted set of at least one valid one-time passcode 21.

In a *send access request* step 46, the user device 2 sends the access request 24 to the electronic lock 12. Since the user device 2 is unable to decrypt the at least one passcode 22, the user device 2 cannot evaluate whether the entered passcode is valid or not. Instead, the data for passcode evaluation is provided to the electronic lock 12.

In a *receive access request* step 48, the electronic lock 12 receives the access request 24 from the user device. As described above, the access request 24 comprises the entered passcode, having been manually entered into the user device 2 by the user 5. The access request further comprises the encrypted set of at least one of valid one-time passcodes.

In an optional *verify* step 49, the electronic lock 12 verifies that the digital signature is valid, based on a prestored public key in the electronic lock. The public key can e.g. be stored in the electronic lock 12 during production, and/or by maintenance personnel. The public key is stored in a manner that allows the electronic lock 12 to trust the public key, and can thereby trust data that is signed by a secret key corresponding the public key. The electronic lock 12 optionally stores several public keys, in which case it is sufficient that one of the public keys can be used to verify the digital signature.

In a *decrypt* step 50, the electronic lock 12 decrypts the set of at least one of valid one-time passcodes. As described above, the decryption can be based on asymmetric or symmetric cryptographic operations.

In a conditional *match* step 52, the electronic lock 12 determines whether the entered passcode matches a passcode in the set of at least one of one-time passcodes. In other words, is the entered passcode valid? If this is the case, the method proceeds to an *unlock* step 54, or an optional *determine user identity* step 53.

In the optional *determine user identity* step 53, the electronic lock 12 determines a user identity based on an association between the entered passcode and user identity. When this step is performed, the association between passcode and user identity is included in the access request. In this way, logs can be kept by the electronic lock 12 where all valid access operations can be logged in association with a particular user identity.

In an *unlock* step 54, the electronic lock 12 sets the electronic lock 12 in an unlocked state.

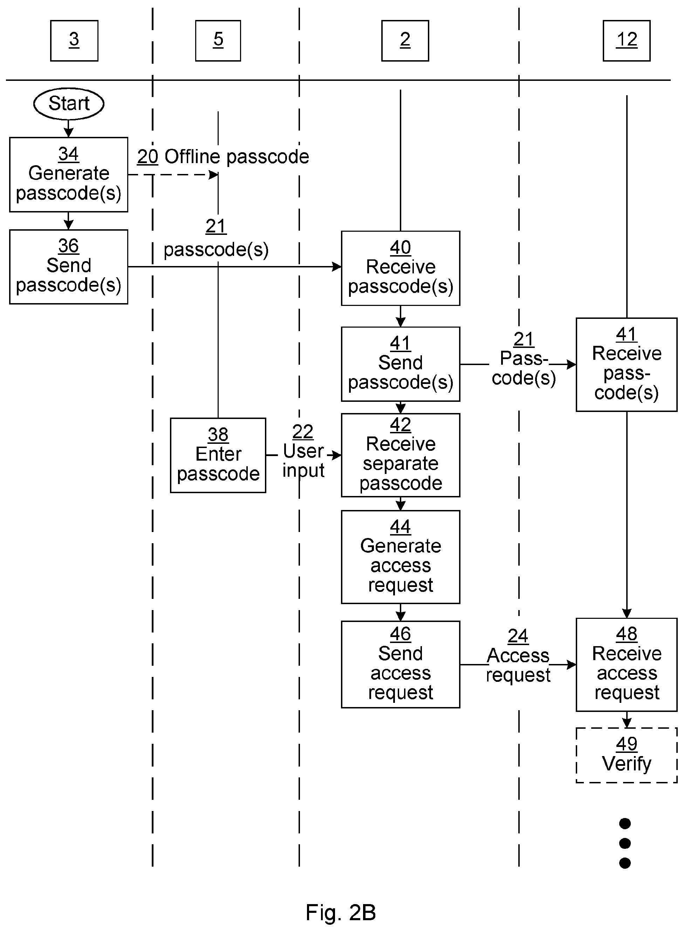

Looking now to Fig 2B, only differences compared to embodiments illustrated by Fig 2A will be described.

Once the user device 2 has received the passcode(s) 21 in step 40, the user device 2 here sends the passcode(s) to the electronic lock 12. Hence, the electronic lock 12 receives the passcode(s) 21 separately in a receive passcode(s) step 41. In one embodiment, the passcodes are received in a separate sequence, for another user, compared to the sequence in which the passcode is entered. In other words, the electronic lock 12 can be supplied with valid passcode(s) from one user in advance to the access request sequence from another user. In one embodiment, the passcodes are received for the same user, compared to the sequence in which the passcode is entered, but at different points in time.

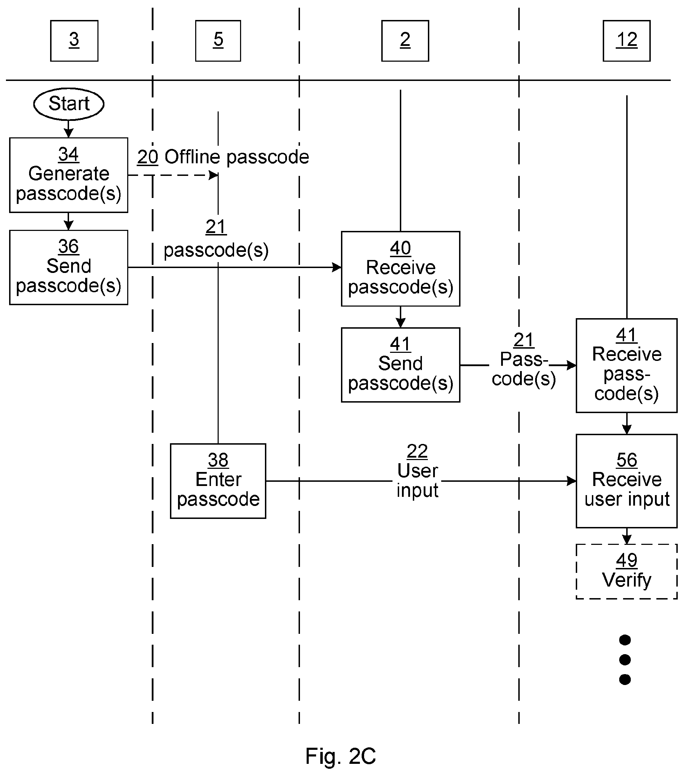

Looking now to Fig 2C, only differences compared to embodiments illustrated by Fig 2B will be described.

Here, instead of entering the passcode into the user device 2, the user 5 enters 38 the passcode directly to the electronic lock 12, e.g. using a keypad or similar.

Using embodiments presented herein, unlocking based on one-time passcodes is provided in a manner that is reliable also for electronic lock 12 that may be offline. The experience is convenient for the user, only having to enter the passcode into the user device or on a keypad, while the electronic lock is able to evaluate the entered passcode, even if the electronic lock is not online. Notably, the user device neither needs to be online at the time of requesting access. This provides a secure solution using one-time passcodes that cannot be reused, even for electronic lock 12 that might be provided in locations where network access is limited due to cost and/or physical characteristics (e.g. underground or remote location).

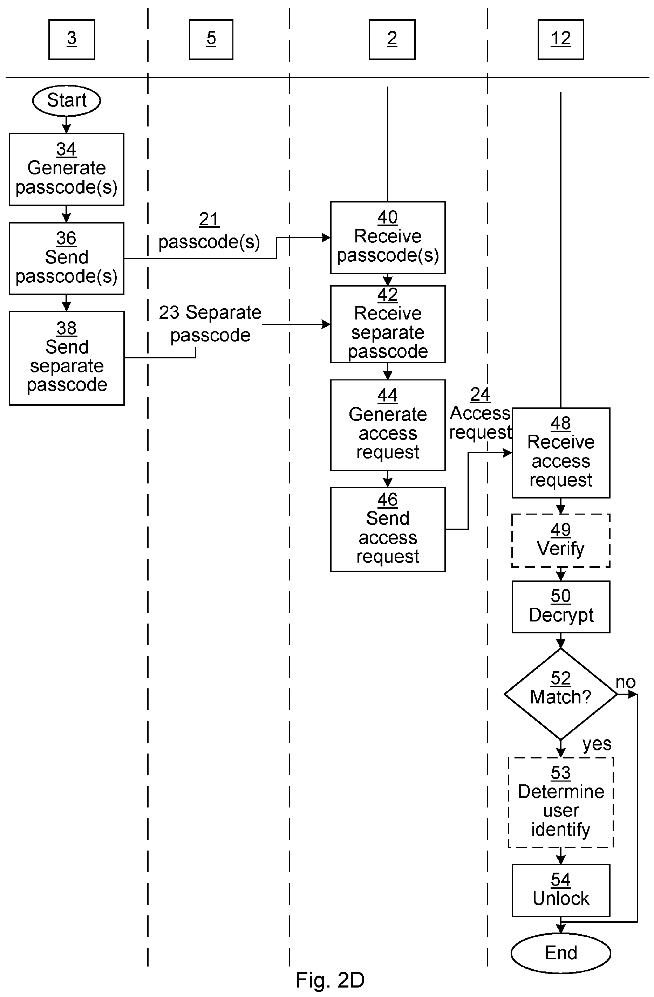

Looking now to Fig 2D, only differences compared to embodiments covered by Fig 2A will be described. Here, there is no manual user input. Instead, the separate passcode 23 (corresponding to the offline passcode) is received 42 (directly or indirectly) by the user device 2 from the code generation server 3.

Hence, the user device 2, or more specifically the app for access control in the user device 2, can receive the separate passcode 23. The separate passcode 23 can be transferred in a message, such as a text message or an e-mail. Optionally, the message can then contain a link a deep link to launch the local app for access control in the user device 2. As an illustratory example, the text message 25 can contain the following snippet:
appid:///?p=e29tYWNjZXNZIG9iamvjdAHd

In the exemplary snippet above, *appid* denotes an identifier of the access control app in the user device 2 and the text after the "p=" is the separate passcode, e.g. in the form of an encoded binary access object or any other alphanumeric string. The separate passcode can be significantly longer, as long as it fits within the message.

When the user 5 receives such a message in the user device 2, the user 5 may click the link to transfer the separate passcode to the access control app of the user device 2.

Alternatively, the separate passcode 23 can be received over IP traffic from the code generation server 3.

Once the access control app has the separate passcode 23, the rest of the procedure can be the same as that illustrated in Fig 2A, described above.

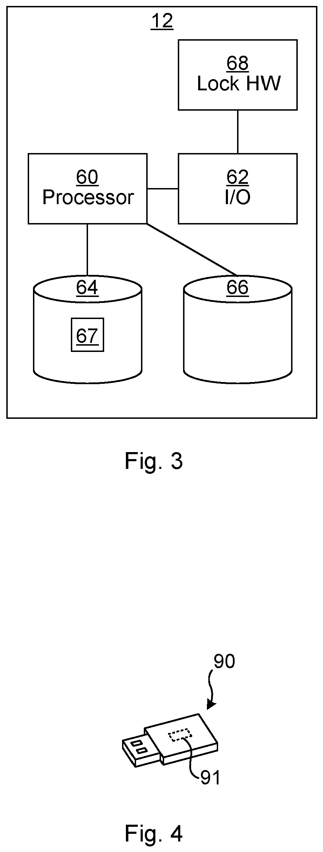

Fig 3 is a schematic diagram illustrating components of the electronic lock 12 of Fig 1. A processor 60 is provided using any combination of one or more of a suitable central processing unit (CPU), graphics processing unit (GPU), multiprocessor, neural processing unit (NPU), microcontroller, digital signal processor (DSP), etc., capable of executing software instructions 67 stored in a memory 64, which can thus be a computer program product. The processor 60 could alternatively be implemented using an application specific integrated circuit (ASIC), field programmable gate array (FPGA), etc. The processor 60 can be configured to execute the method of the electronic lock 12 described with reference to Figs 2A-C above.

The memory 64 can be any combination of random-access memory (RAM) and/or read-only memory (ROM). The memory 64 also comprises non-transitory persistent storage, which, for example, can be any single one or combination of magnetic memory, optical memory, or solid-state memory.

A data memory 66 is also provided for reading and/or storing data during execution of software instructions in the processor 60. The data memory 66 can be any combination of RAM and/or ROM.

The electronic lock 12 further comprises an I/O interface 62 for communicating with internal entities such as lock hardware 68, and external entities such as the user device 2.

The lock hardware 68 can e.g. comprises a motor and/or solenoid for controlling mechanics such that the electronic lock 12 can assume a locked or unlocked state. In this way, the electronic lock 12 is configured, on command from the processor 60, to set the electronic lock 12 in an unlocked state or locked state, e.g. by controlling the lock hardware 68.

Other components of the electronic lock 12 are omitted in order not to obscure the concepts presented herein.

Fig 4 shows one example of a computer program product 90 comprising computer readable means. On this computer readable means, a computer program 91 can be stored in a non-transitory memory. The computer program can cause a processor to execute a method according to embodiments described herein. In this example, the computer program product 90 is in the form of a removable solid-state memory, e.g. a Universal Serial Bus (USB) drive. As explained above, the computer program product could also be embodied in a memory of a device, such as the computer program product 64 of Fig 3. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

Here now follows a list of enumerated embodiments from another perspective.

Embodiment 1. A method for controlling access to a restricted physical space, the method being performed by a system comprising a user device and an electronic lock, the method comprising:
receiving, by the user device, an encrypted set of at least one valid one-time passcode;
receiving, by the user device, user input for a passcode being manually entered into the user device by a user, resulting in an entered passcode;
generating, by the user device, an access request comprising the entered passcode and the encrypted set of at least one valid one-time passcode;
sending, by the user device, the access request to the electronic lock;
receiving, by the electronic lock, the access request;
decrypting, by the electronic lock, the set of at least one valid one-time passcode;
determining, by the electronic lock, that the entered passcode matches a passcode in the set of at least one one-time passcode; and
setting, by the electronic lock, the electronic lock in an unlocked state.

Embodiment 2. A method for controlling access to a restricted physical space, the method being performed by an electronic lock, the method comprising:
receiving an access request from a user device, the access request comprising an entered passcode, having been manually entered into the user device by a user, wherein the access request further comprises an encrypted set of at least one of valid one-time passcodes;
decrypting the set of at least one of valid one-time passcodes;
determining that the entered passcode matches a passcode in the set of at least one of one-time passcodes; and
setting the electronic lock in an unlocked state.

Embodiment 3. The method according to embodiment 2, wherein the set of at least one of valid one-time passcodes is cryptographically signed with a digital signature, and wherein the method further comprises:
verifying that the digital signature is valid, based on a prestored public key in the electronic lock.

Embodiment 4. The method according to embodiment 2 or 3, wherein the passcodes are in the form of a sequence of digits.

Embodiment 5. The method according to any one of embodiments 2 to 4, further comprising:
determining a user identity based on an association between the entered passcode and user identity, wherein the association is included in the access request.

Embodiment 6. An electronic lock for controlling access to a restricted physical space, the electronic lock comprising:
a processor; and
a memory storing instructions that, when executed by the processor, cause the electronic lock to:
   receive an access request from a user device, the access request comprising an entered passcode, having been manually entered into the user device by a user, wherein the access request further comprises an encrypted set of at least one of valid one-time passcodes;
   decrypt the set of at least one of valid one-time passcodes;
   determine that the entered passcode matches a passcode in the set of at least one of one-time passcodes; and
   set the electronic lock in an unlocked state.

Embodiment 7. The electronic lock according to embodiment 6, wherein the set of at least one of valid one-time passcodes is cryptographically signed with a digital signature, and wherein the electronic lock further comprises instructions that, when executed by the processor, cause the electronic lock to:
verify that the digital signature is valid, based on a prestored public key in the electronic lock.

Embodiment 8. The electronic lock according to embodiment 6 or 7, wherein the passcodes are in the form of a sequence of digits.

Embodiment 9. The electronic lock according to any one of embodiments 6 to 8, further comprising instructions that, when executed by the processor, cause the electronic lock to:
determine a user identity based on an association between the entered passcode and user identity, wherein the association is included in the access request.

Embodiment 10. A computer program for controlling access to a restricted physical space, the computer program comprising computer program code which, when executed on an electronic lock causes the electronic lock to:
receive an access request from a user device, the access request comprising an entered passcode, having been manually entered into the user device by a user, wherein the access request further comprises an encrypted set of at least one of valid one-time passcodes;
decrypt the set of at least one of valid one-time passcodes;
determine that the entered passcode matches a passcode in the set of at least one of one-time passcodes; and
set the electronic lock in an unlocked state.

Embodiment 11. A computer program product comprising a computer program according to embodiment 10 and a computer readable means comprising non-transitory memory in which the computer program is stored.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

## Claims

1. A method for controlling access to a restricted physical space (16),
the method being performed by a system comprising a user device (2) and an electronic lock, the method comprising:
receiving (40), by the user device (2), an encrypted set of at least one valid one-time passcode;
receiving (42), by the user device (2), separately from the encrypted set of at least one valid one-time passcode, a separate passcode;
generating (44), by the user device (2), an access request comprising the separate passcode and the encrypted set of at least one valid one-time passcode;
sending (46), by the user device (2), the access request to the electronic lock (12);
receiving (48), by the electronic lock (12), the access request;
decrypting (50), by the electronic lock (12), the set of at least one valid one-time passcode;
determining (52), by the electronic lock (12), that the separate passcode matches a passcode in the set of at least one one-time passcode; and
setting (54), by the electronic lock (12), the electronic lock (12) in an unlocked state.

2. A method for controlling access to a restricted physical space (16), the method being performed by an electronic lock (12), the method comprising:
receiving (48) an access request from a user device (2), the access request comprising a separate passcode, wherein the access request further comprises an encrypted set of at least one of valid one-time passcodes;
decrypting (50) the set of at least one of valid one-time passcodes;
determining (52) that the separate passcode matches a passcode in the set of at least one of one-time passcodes; and
setting (54) the electronic lock (12) in an unlocked state.

3. The method according to claim 2, wherein the separate passcode is an entered passcode, having been manually entered into the user device by a user.

4. The method according to claim 2, wherein the separate passcode is received by the user device in a message.

5. The method according to claim 4, wherein the message is an e-mail message or a text message of a cellular communication network.

6. The method according to any one of claims 2 to 5, wherein the set of at least one of valid one-time passcodes is cryptographically signed with a digital signature, and wherein the method further comprises:
verifying (49) that the digital signature is valid, based on a prestored public key in the electronic lock (2).

7. The method according to any one of claims 2 to 6, wherein the passcodes are in the form of a sequence of digits.

8. The method according to any one of claims 2 to 7, further comprising:
determining (53) a user identity based on an association between the separate passcode and user identity, wherein the association is included in the access request.

9. An electronic lock (12) for controlling access to a restricted physical space (16), the electronic lock (12) comprising:
a processor (60); and
a memory (64) storing instructions (67) that, when executed by the processor, cause the electronic lock (12) to:
receive an access request from a user device (2), the access request comprising a separate passcode, wherein the access request further comprises an encrypted set of at least one of valid one-time passcodes;
decrypt the set of at least one of valid one-time passcodes;
determine that the separate passcode matches a passcode in the set of at least one of one-time passcodes; and
set the electronic lock (12) in an unlocked state.

10. The electronic lock (12) according to claim 9, wherein the separate passcode is an entered passcode, having been manually entered into the user device by a user.

11. The electronic lock (12) according to claim 9, wherein the separate passcode is received by the user device in a message.

12. The electronic lock (12) according to any one of claims 9 to 11, wherein the set of at least one of valid one-time passcodes is cryptographically signed with a digital signature, and wherein the electronic lock (12) further comprises instructions (67) that, when executed by the processor, cause the electronic lock (12) to:
verify that the digital signature is valid, based on a prestored public key in the electronic lock (2).

13. The electronic lock (12) according to any one of claims 9 to 12, further comprising instructions (67) that, when executed by the processor, cause the electronic lock (12) to:
determine a user identity based on an association between the separate passcode and user identity, wherein the association is included in the access request.

14. A computer program (67, 91) for controlling access to a restricted physical space (16), the computer program comprising computer program code which, when executed on an electronic lock (12) causes the electronic lock (12) to:
receive an access request from a user device (2), the access request comprising a separate passcode, wherein the access request further comprises an encrypted set of at least one of valid one-time passcodes;
decrypt the set of at least one of valid one-time passcodes;
determine that the separate passcode matches a passcode in the set of at least one of one-time passcodes; and
set the electronic lock (12) in an unlocked state.

15. A computer program product (64, 90) comprising a computer program according to claim 14 and a computer readable means comprising non-transitory memory in which the computer program is stored.

## Patentansprüche

1. Verfahren zum Steuern des Zugangs zu einem beschränkten physischen Raum (16), wobei das Verfahren von einem System durchgeführt wird, das eine Benutzervorrichtung (2) und ein elektronisches Schloss umfasst, wobei das Verfahren umfasst:
Empfangen (40) eines verschlüsselten Satzes mindestens eines gültigen Einmal-Passcodes durch die Benutzervorrichtung (2);
Empfangen (42) eines separaten Passcodes durch die Benutzervorrichtung (2), getrennt von dem verschlüsselten Satz mindestens eines gültigen Einmal-Passcodes;
Erzeugen (44) einer Zugangsanfrage, die den separaten Passcode und den verschlüsselten Satz mindestens eines gültigen Einmal-Passcodes umfasst, durch die Benutzervorrichtung (2);
Senden (46) der Zugangsanfrage durch die Benutzervorrichtung (2) an das elektronische Schloss (12);
Empfangen (48) der Zugangsanfrage durch das elektronische Schloss (12);
Entschlüsseln (50) des Satzes mindestens eines gültigen Einmal-Passcodes durch das elektronische Schloss (12);
Bestimmen (52), durch das elektronische Schloss (12), dass der separate Passcode mit einem Passcode in dem Satz mindestens eines Einmal-Passcodes übereinstimmt; und
Versetzen (54) des elektronischen Schlosses (12) durch das elektronische Schloss (12) in einen entriegelten Zustand.

2. Verfahren zum Steuern des Zugangs zu einem beschränkten physischen Raum (16), wobei das Verfahren von einem elektronischen Schloss (12) durchgeführt wird, wobei das Verfahren umfasst:
Empfangen (48) einer Zugangsanfrage von einer Benutzervorrichtung (2), wobei die Zugangsanfrage einen separaten Passcode umfasst, wobei die Zugangsanfrage weiter einen verschlüsselten Satz mindestens eines von gültigen Einmal-Passcodes umfasst;
Entschlüsseln (50) des Satzes mindestens eines von gültigen Einmal-Passcodes;
Bestimmen (52), dass der separate Passcode mit einem Passcode in dem Satz mindestens eines von Einmal-Passcodes übereinstimmt; und
Versetzen (54) des elektronischen Schlosses (12) in einen entriegelten Zustand.

3. Verfahren nach Anspruch 2, wobei der separate Passcode ein eingegebener Passcode ist, der von einem Benutzer manuell in die Benutzervorrichtung eingegeben wurde.

4. Verfahren nach Anspruch 2, wobei der separate Passcode von der Benutzervorrichtung in einer Nachricht empfangen wird.

5. Verfahren nach Anspruch 4, wobei die Nachricht eine E-Mail-Nachricht oder eine Textnachricht aus einem Mobilfunknetz ist.

6. Verfahren nach einem der Ansprüche 2 bis 5, wobei der Satz mindestens eines von gültigen Einmal-Passcodes mit einer digitalen Signatur kryptografisch signiert ist und wobei das Verfahren weiter umfasst:
Verifizieren (49), auf Basis eines in dem elektronischen Schloss (2) vorab gespeicherten öffentlichen Schlüssels, dass die digitale Signatur gültig ist.

7. Verfahren nach einem der Ansprüche 2 bis 6, wobei die Passcodes in Form einer Ziffernfolge vorliegen.

8. Verfahren nach einem der Ansprüche 2 bis 7, weiter umfassend:
Bestimmen (53) einer Benutzeridentität auf Basis einer Zuordnung zwischen dem separaten Passcode und der Benutzeridentität, wobei die Zuordnung in der Zugangsanfrage beinhaltet ist.

9. Elektronisches Schloss (12) zum Steuern des Zugangs zu einem beschränkten physischen Raum (16), wobei das elektronische Schloss (12) umfasst:
einen Prozessor (60); und
einen Speicher (64), der Anweisungen (67) speichert, die, wenn sie von dem Prozessor ausgeführt werden, bewirken, dass das elektronische Schloss (12):
eine Zugangsanfrage von einer Benutzervorrichtung (2) empfängt, wobei die Zugangsanfrage einen separaten Passcode umfasst, wobei die Zugangsanfrage weiter einen verschlüsselten Satz mindestens eines von gültigen Einmal-Passcodes umfasst;
den Satz mindestens eines von gültigen Einmal-Passcodes entschlüsselt;
bestimmt, dass der separate Passcode mit einem Passcode in dem Satz mindestens eines von Einmal-Passcodes übereinstimmt; und
das elektronische Schloss (12) in einen entriegelten Zustand versetzt.

10. Elektronische Schloss (12) nach Anspruch 9, wobei der separate Passcode ein eingegebener Passcode ist, der von einem Benutzer manuell in die Benutzervorrichtung eingegeben wurde.

11. Elektronische Schloss (12) nach Anspruch 9, wobei der separate Passcode von der Benutzervorrichtung in einer Nachricht empfangen wird.

12. Elektronische Schloss (12) nach einem der Ansprüche 9 bis 11, wobei der Satz mindestens eines von gültigen Einmal-Passcodes mit einer digitalen Signatur kryptografisch signiert ist und wobei das elektronische Schloss (12) weiter Anweisungen (67) umfasst, die, wenn sie von dem Prozessor ausgeführt werden, bewirken, dass das elektronische Schloss (12):
auf Basis eines in dem elektronischen Schloss (2) vorab gespeicherten öffentlichen Schlüssels verifiziert, dass die digitale Signatur gültig ist.

13. Elektronisches Schloss (12) nach einem der Ansprüche 9 bis 12, das weiter Anweisungen (67) umfasst, die, wenn sie von dem Prozessor ausgeführt werden, bewirken, dass das elektronische Schloss (12):
eine Benutzeridentität auf Basis einer Zuordnung zwischen dem separaten Passcode und der Benutzeridentität bestimmt, wobei die Zuordnung in der Zugangsanfrage beinhaltet ist.

14. Computerprogramm (67, 91) zum Steuern des Zugangs zu einem beschränkten physischen Raum (16), wobei das Computerprogramm Computerprogrammcode umfasst, der, wenn er auf einem elektronischen Schloss (12) ausgeführt wird, bewirkt, dass das elektronische Schloss (12):
eine Zugangsanfrage von einer Benutzervorrichtung (2) empfängt, wobei die Zugangsanfrage einen separaten Passcode umfasst, wobei die Zugangsanfrage weiter einen verschlüsselten Satz mindestens eines von gültigen Einmal-Passcodes umfasst;
den Satz mindestens eines von gültigen Einmal-Passcodes entschlüsselt;
bestimmt, dass der separate Passcode mit einem Passcode in dem Satz mindestens eines von Einmal-Passcodes übereinstimmt; und
das elektronische Schloss (12) in einen entriegelten Zustand versetzt.

15. Computerprogrammprodukt (64, 90), das ein Computerprogramm nach Anspruch 14 und ein computerlesbares Mittel umfasst, das nichtflüchtigen Speicher umfasst, in dem das Computerprogramm gespeichert ist.

## Revendications

1. Procédé de contrôle d'accès à un espace physique restreint (16), le procédé étant mis en œuvre par un système comprenant un dispositif utilisateur (2) et une serrure électronique, le procédé comprenant :
la réception (40), par le dispositif utilisateur (2), d'un ensemble chiffré d'au moins un code à usage unique valide ;
la réception (42), par le dispositif utilisateur (2), séparément de l'ensemble chiffré d'au moins un code à usage unique valide, d'un code distinct ;
la génération (44), par le dispositif utilisateur (2), d'une demande d'accès comprenant le code distinct et l'ensemble chiffré d'au moins un code à usage unique valide ;
l'envoi (46), par le dispositif utilisateur (2), de la demande d'accès à la serrure électronique (12) ;
la réception (48), par la serrure électronique (12), de la demande d'accès ;
le déchiffrement (50), par la serrure électronique (12), de l'ensemble d'au moins un code à usage unique valide ;
la détermination (52), par la serrure électronique (12), pour établir que le code distinct correspond à un code dans l'ensemble d'au moins un code à usage unique ; et
la mise (54), par la serrure électronique (12), de la serrure électronique (12) dans un état déverrouillé.

2. Procédé de contrôle d'accès à un espace physique restreint (16), le procédé étant mis en œuvre par une serrure électronique (12), le procédé comprenant :
la réception (48) d'une demande d'accès provenant d'un dispositif utilisateur (2), la demande d'accès comprenant un code distinct, dans lequel la demande d'accès comprend en outre un ensemble chiffré d'au moins un parmi des codes à usage unique valides ;
le déchiffrement (50) de l'ensemble d'au moins un parmi des codes à usage unique valides ;
la détermination (52) pour établir que le code distinct correspond à un code dans l'ensemble d'au moins un parmi des codes à usage unique ; et
la mise (54) de la serrure électronique (12) dans un état déverrouillé.

3. Procédé selon la revendication 2, dans lequel le code distinct est un code saisi, ayant été saisi manuellement dans le dispositif utilisateur par un utilisateur.

4. Procédé selon la revendication 2, dans lequel le code distinct est reçu par le dispositif utilisateur dans un message.

5. Procédé selon la revendication 4, dans lequel le message est un courriel ou un message texte d'un réseau de communication cellulaire.

6. Procédé selon l'une quelconque des revendications 2 à 5, dans lequel l'ensemble d'au moins un parmi des codes à usage unique valides est signé par cryptographie avec une signature numérique, et dans lequel le procédé comprend en outre :
la vérification (49) pour établir que la signature numérique est valide, sur la base d'une clé publique stockée au préalable dans la serrure électronique (2).

7. Procédé selon l'une quelconque des revendications 2 à 6, dans lequel les codes sont sous la forme d'une séquence de chiffres.

8. Procédé selon l'une quelconque des revendications 2 à 7, comprenant en outre :
la détermination (53) d'une identité d'utilisateur sur la base d'une association entre le code distinct et l'identité d'utilisateur, dans lequel l'association est incluse dans la demande d'accès.

9. Serrure électronique (12) pour contrôler l'accès à un espace physique restreint (16), la serrure électronique (12) comprenant :
un processeur (60) ; et
une mémoire (64) stockant des instructions (67) qui, lorsqu'elles sont exécutées par le processeur, amènent la serrure électronique (12) à :
recevoir une demande d'accès provenant d'un dispositif utilisateur (2), la demande d'accès comprenant un code distinct, dans lequel la demande d'accès comprend en outre un ensemble chiffré d'au moins un parmi des codes à usage unique valides ;
déchiffrer l'ensemble d'au moins un parmi des codes à usage unique valides ;
déterminer que le code distinct correspond à un code dans l'ensemble d'au moins un parmi des codes à usage unique ; et
mettre la serrure électronique (12) dans un état déverrouillé.

10. Serrure électronique (12) selon la revendication 9, dans laquelle le code distinct est un code saisi, ayant été saisi manuellement dans le dispositif utilisateur par un utilisateur.

11. Serrure électronique (12) selon la revendication 9, dans laquelle le code distinct est reçu par le dispositif utilisateur dans un message.

12. Serrure électronique (12) selon l'une quelconque des revendications 9 à 11, dans laquelle l'ensemble d'au moins un parmi des codes à usage unique valides est signé par cryptographie avec une signature numérique, et dans laquelle la serrure électronique (12) comprend en outre des instructions (67) qui, lorsqu'elles sont exécutées par le processeur, amènent la serrure électronique (12) à :
vérifier que la signature numérique est valide, sur la base d'une clé publique stockée au préalable dans la serrure électronique (2).

13. Serrure électronique (12) selon l'une quelconque des revendications 9 à 12, comprenant en outre des instructions (67) qui, lorsqu'elles sont exécutées par le processeur, amènent la serrure électronique (12) à :
déterminer une identité d'utilisateur sur la base d'une association entre le code distinct et l'identité d'utilisateur, dans lequel l'association est incluse dans la demande d'accès.

14. Programme informatique (67, 91) pour contrôler l'accès à un espace physique restreint (16), le programme informatique comprenant un code de programme informatique qui, lorsqu'il est exécuté sur une serrure électronique (12), amène la serrure électronique (12) à :
recevoir une demande d'accès provenant d'un dispositif utilisateur (2), la demande d'accès comprenant un code distinct, dans lequel la demande d'accès comprend en outre un ensemble chiffré d'au moins un parmi des codes à usage unique valides ;
déchiffrer l'ensemble d'au moins un parmi des codes à usage unique valides ;
déterminer que le code distinct correspond à un code dans l'ensemble d'au moins un parmi des codes à usage unique ; et
mettre la serrure électronique (12) dans un état déverrouillé.

15. Produit de programme informatique (64, 90) comprenant un programme informatique selon la revendication 14 et un moyen lisible par ordinateur comprenant une mémoire non transitoire dans laquelle le programme informatique est stocké.
